Europäisches Patentamt

European Patent Office

Office européen des brevets

(11) Veröffentlichungsnummer: **0 106 835**
**B1**

(12) **EUROPÄISCHE PATENTSCHRIFT**

(45) Veröffentlichungstag der Patentschrift:
**01.04.87**

(21) Anmeldenummer: **83890159.3**

(22) Anmeldetag: **13.09.83**

(51) Int. Cl.⁴: **B 23 K 3/02**, B 23 K 1/00

(54) **Arbeitskopf für eine elektrische Vorrichtung zum Entlöten von Lötstellen und zum Entfernen des flüssigen Lotes.**

(30) Priorität: **13.09.82 AT 3425/82**

(43) Veröffentlichungstag der Anmeldung:
**25.04.84 Patentblatt 84/17**

(45) Bekanntmachung des Hinweises auf die Patenterteilung:
**01.04.87 Patentblatt 87/14**

(84) Benannte Vertragsstaaten:
**CH DE FR GB IT LI NL SE**

(56) Entgegenhaltungen:
**GB - A - 1 513 496**
**US - A - 3 239 124**
**US - A - 4 159 074**

(73) Patentinhaber: **Toth, Attila, Zechmeisterstrasse 15,
AT-4020 Linz (AT)**

(72) Erfinder: **Toth, Attila, Zechmeisterstrasse 15,
AT-4020 Linz (AT)**

(74) Vertreter: **Boeckmann, Peter, Dipl.-Ing. et al,
Patentanwälte Dipl.-Ing. Peter Boeckmann, Dipl.-Ing.
Leo Brauneiss Strohgasse 10, A-1030 Wien (AT)**

EP 0 106 835 B1

ACTORUM AG

**Beschreibung**

Die Erfindung betrifft einen Arbeitskopf für eine elektrische Vorrichtung zum Entlöten von Lötstellen und zum Entfernen des flüssigen Lotes, mit einem mit einen beiden Enden an eine Spannungsquelle, vorzugsweise an eine Niederspannungsquelle, angeschlossenen, zu einer Schleife mit teilweise parallelen Schenkeln gebogenen Widerstandsdraht.

Es sind bereits elektrische Lötkolben bekannt, deren Arbeitskopf aus einem zu einer Schleife gebogenen Widerstandsdraht besteht, welcher an eine Niederspannungsquelle angeschlossen ist, die beispielsweise von der Sekundärwicklung eines im Gehäuse des Lötkolbens untergebrachten Transformators gebildet ist. Beim Einschalten eines solchen Lötkolbens fliesst ein Strom beträchtlicher Stromstärke durch den Widerstandsdraht, so dass dieser rasch auf eine Temperatur erhitzt wird, bei welcher das Lot schmilzt.

Bei der Durchführung von Reparaturen, beispielsweise an elektrischen Geräten, besteht häufig das Problem, vorhandene Lötstellen, über welche defekte Bestandteile angelötet sind, zu entlöten, damit diese defekten Bestandteile entfernt und durch funktionsfähige Bestandteile ersetzt werden können. Zum Entlöten von Lötstellen und zum Entfernen des Lotes eignen sich nun die bekannten Lötkolben nicht, denn mit diesen bekannten Lötkolben kann das Lot nicht abgeführt werden, wie es erforderlich ist, um einen neuerlichen Lötvorgang durchführen zu können.

Es wurde zwar bereits vorgeschlagen, mit einer sogenannten Zinnpumpe das mittels eines bekannten Lötkolbens verflüssigte Lot abzuführen, jedoch ist diese Vorgangsweise kompliziert und nicht immer durchführbar. Es müssen nämlich der Lötkolben in der einen Hand und die Zinnpumpe zum Abführen des verflüssigten Lotes in der anderen Hand gehalten werden, so dass keine Hand mehr zum Greifen anderer Teile, beispielsweise zum Festhalten eines bestimmten Teiles und/oder zum Entfernen des defekten Bestandteiles, zur Verfügung steht.

Aus der US-A 3 239 124 ist eine Vorrichtung zum Entlöten von Lötstellen und zum Entfernen des flüssigen Lotes bekannt, bei welcher die parallel zueinander verlaufenden, eng nebeneinanderliegenden freien Enden zweier an eine Spannungsquelle angeschlossener Widerstandsdrähte miteinander und mit dem freien Ende eines rohrförmigen Armes durch Hartlöten verbunden sind. Über den rohrförmigen Arm wird Luft zugeführt, so dass beim Entlötvorgang das durch Wärmezufuhr über die Widerstandsdrähte verflüssigte Lot durch die in den rohrförmigen Arm eingeblasene Luft abgeführt wird. Nachteilig ist bei dieser bekannten Vorrichtung die Notwendigkeit der Anordnung des rohrförmigen Armes, wodurch der Arbeitskopf nicht nur schwerer, sondern auch voluminöser wird und dadurch schwer zugängliche Lötstellen mit diesem Arbeitskopf nicht mehr erreicht werden können. Ausserdem ist das Arbeiten mit der bekannten Vorrichtung deshalb mühsam, da die Luftzufuhr zum rohrförmigen Arm dadurch erfolgt, dass der Benützer der Vorrichtung durch den Mund Luft in einen mit dem rohrförmigen Arm verbundenen Schlauch bläst.

Die vorliegende Erfindung hat sich zur Aufgabe gestellt, einen Arbeitskopf zu schaffen, welcher in einen bekannten Lötkolben anstelle des Lötkopfes eingesetzt werden kann und mit welchem ohne zusätzliche Massnahmen, lediglich durch entsprechende Formgebung des Widerstandsdrahtes, sowohl eine Erwärmung der Lötstelle und dadurch eine Verflüssigung des Lotes als auch eine Abfuhr des verflüssigten Lotes vorgenommen werden kann. Zur Lösung dieser Aufgabe wird vorgeschlagen, die beiden parallelen Schenkel der Schleife zumindest über einen Teil ihrer Länge in geringem Abstand voneinander anzuordnen und in diesem Teil mit einer Abbiegung zu versehen, in welcher Abbiegung eine Erweiterung dieses geringen Abstandes zur Aufnahme der Lötstelle vorgesehen ist. Optimale Verhältnisse ergeben sich hiebei, wenn die beiden parallelen Schenkel zumindest über einen Teil ihrer Länge einen Abstand zwischen 0,1 und 0,3 mm aufweisen und im Bereich der Erweiterung einen Abstand von 1 mm aufweisen. Diese Erweiterung ist zweckmässig etwa von Kreisbögen begrenzt, so dass diese Erweiterung nicht nur eine leicht herzustellende Formgebung aufweist, sondern auch die Lötstelle mit Sicherheit aufnehmen kann.

Es hat sich gezeigt, dass bei einer solchen Ausführungsform des Arbeitskopfes bei einem Stromdurchfluss durch den Widerstandsdraht die von der Erweiterung aufgenommene Lötstelle nicht nur geschmolzen wird, sondern dass das geschmolzene Lot auch zwischen den beiden in geringem Abstand voneinander angeordneten Schenkeln der Schleife abfliesst, bis es zum Ende der Schleife gelangt, wo die beiden Schenkel miteinander verbunden sind. Dort sammelt sich das Lot an und kann beispielsweise durch eine kurze ruckartige Bewegung der Vorrichtung weggeschleudert werden. Der Wegtransport des flüssigen Lotes wird dadurch bewirkt, dass infolge des Durchflusses eines Stromes beträchtlicher Stromstärke durch die beiden nur einen geringen Abstand aufweisenden Schenkel des Widerstandsdrahtes sich ein elektrisches Feld aufbaut, welches auf das flüssige Lot eine Kraft im Sinne eines Abtransportes dieses Lotes von der die Lötstelle aufnehmenden Erweiterung ausübt.

Vorteilhaft ist es, wenn erfindungsgemäss im Bereich der Abbiegung die Schenkel der Schleife um etwa 180° umgebogen sind. In diesem Fall benötigt der erfindungsgemässe Arbeitskopf nicht mehr Platz als der Kopf eines üblichen Lötkolbens und kann daher auch bei schwer zugänglichen Lötstellen eingesetzt werden.

In der Zeichnung ist die Erfindung anhand eines Ausführungsbeispieles schematisch veranschaulicht.

Fig. 1 zeigt einen erfindungsgemässen Arbeitskopf in vergrösserter Darstellung in Seitenansicht in Richtung des Pfeiles I in Fig. 2.

Fig. 2 stellt eine Ansicht des Arbeitskopfes in Richtung des Pfeiles II in Fig. 1 dar.

Fig. 3 zeigt ein elektrisches Schaltbild.

Der in der Zeichnung dargestellte erfindungsgemässe Arbeitskopf kann anstelle des aus einem zu einer Schleife gebogenen Widerstandsdraht bestehenden Lötkopfes in einem handelsüblichen Lötkolben verwendet werden. Der erfindungsgemässe Arbeitskopf besteht hiebei gleichfalls aus einem Widerstandsdraht, der zu einer Schleife 1 gebogen ist, wobei die beiden freien Enden 2, 3 dieses Widerstandsdrahtes in die hiefür vorgesehenen Ausnehmungen im Lötkolbengehäuse eingesetzt sind. Der Abstand dieser beiden Enden 2, 3 voneinander muss daher so bemessen sein, dass er dem Abstand der zugehörigen Öffnungen im Lötkolbengehäuse entspricht. Um eine Bogenführung 4 verringert sich jedoch dieser Abstand auf einen Wert a, der etwa 0,1 bis 0,3 mm beträgt. Hier verlaufen also die beiden Schenkel 5, 6 der Schlaufe 1 parallel und eng nebeneinander. Bei 7 sind die Schenkel miteinander verbunden. Bei 8 weisen die beiden Schenkel 5, 6 eine Abbiegung auf und sind um etwa 180° umgebogen. Im Bereich dieser Abbiegung 8 befindet sich eine etwa von Kreisbögen begrenzte Erweiterung 9 des geringen Abstandes a auf einen Betrag von etwa 1 mm. Diese Erweiterung 9 dient zur Aufnahme der zu entlötenden Lötstelle.

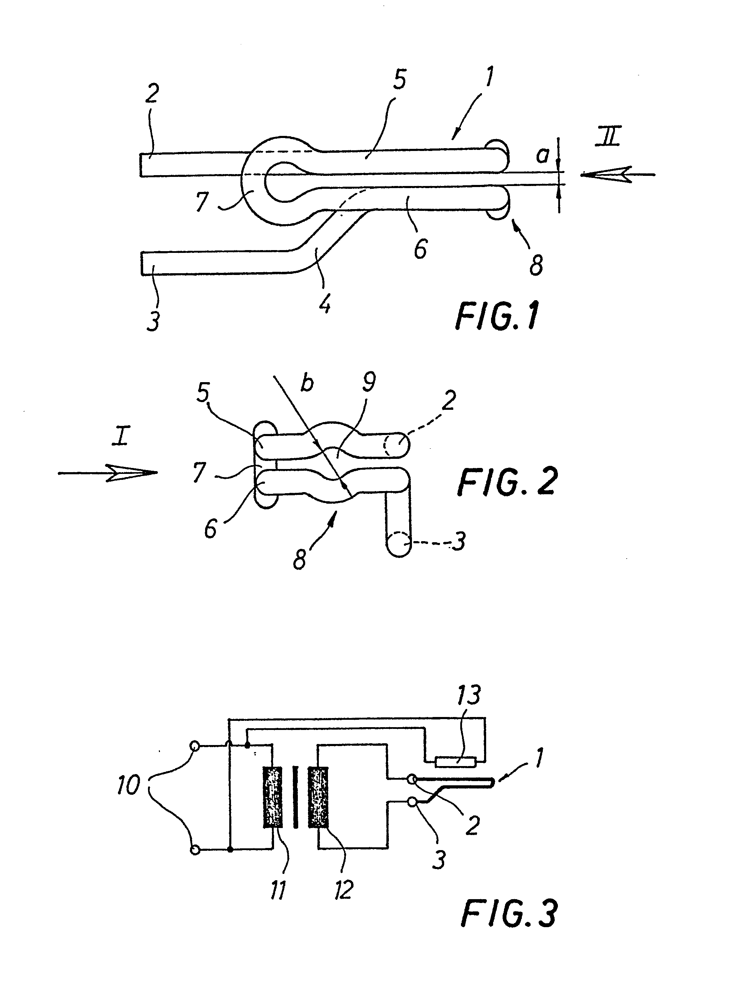

In Fig. 3 ist anhand eines Schaltbildes die elektrische Stromversorgung des erfindungsgemässen, von der Schleife 1 gebildeten Arbeitskopfes gezeigt. Über Klemmen 10, welche über ein nicht dargestelltes Kabel mit einer Steckdose verbunden sind, ist die Primärwicklung 11 eines Transformators gespeist, dessen als Niederspannungswicklung ausgebildete Sekundärwicklung 12 mit den beiden Enden 2, 3 des erfindungsgemässen Arbeitskopfes in elektrisch leitender Verbindung steht. Ferner ist ein von der Primärseite des Transformators gespeister Heizwiderstand 13 vorgesehen.

Wird die mit einem erfindungsgemässen Arbeitskopf versehene Vorrichtung eingeschaltet, so fliesst im Widerstandsdraht ein Strom mit beträchtlicher Stromstärke, wodurch der Widerstandsdraht rasch auf die zum Entlöten erforderliche Temperatur gebracht wird. Gleichzeitig wird aber durch den über die Schleife 1 fliessenden Strom ein elektrisches Feld aufgebaut, welches, wie Versuche eindeutig bewiesen haben, bewirkt, dass dann, wenn in die Erweiterung 9 eine Lötstelle eingeführt wird, das infolge der Erwärmung geschmolzene Lot in dem geringen Zwischenraum zwischen den beiden Schenkeln 5, 6 in Richtung zur Verbindungsstelle 7 der beiden Schenkel 5, 6 abfliesst und sich dort sammelt, von wo es durch eine entsprechende Handbewegung abgeschleudert werden kann. Das flüssige Lot wird also beim Entlötvorgang ohne zusätzliche Massnahmen in der gewünschten Weise abtransportiert.

## Patentansprüche

1. Arbeitskopf für eine elektrische Vorrichtung zum Entlöten von Lötstellen und zum Entfernen des flüssigen Lotes, mit einem mit seinen beiden Enden (2, 3) an eine Spannungsquelle (12) angeschlossenen, zu einer Schleife mit auf der Arbeitsseite parallelen Schenkeln (5, 6) gebogenen Widerstandsdraht, dadurch gekennzeichnet, dass die beiden parallelen Schenkel (5, 6) der Schleife (1) zumindest über einen Teil ihrer Länge in geringem Abstand (a) voneinander angeordnet sind und in diesem Teil abgebogen sind, in welcher Abbiegung (8) eine Erweiterung (9) dieses geringen Abstandes (a) zur Aufnahme der Lötstelle vorgesehen ist.

2. Arbeitskopf nach Anspruch 1, dadurch gekennzeichnet, dass die beiden parallelen Schenkel (5, 6) zumindest über einen Teil ihrer Länge einen Abstand zwischen 0,1 und 0,3 mm aufweisen.

3. Arbeitskopf nach Anspruch 1, dadurch gekennzeichnet, dass die Erweiterung (9) etwa von Kreisbögen begrenzt ist.

4. Arbeitskopf nach Anspruch 1, dadurch gekennzeichnet, dass die beiden Schenkel (5, 6) im Bereich der Erweiterung einen Abstand von etwa 1 mm aufweisen.

5. Arbeitskopf nach Anspruch 1, dadurch gekennzeichnet, dass im Bereich der Abbiegung (8) die Schenkel (5, 6) der Schleife (1) um etwa 180° umgebogen sind.

## Claims

1. Working head for an electrical device for desoldering soldered joints and for removing the liquid solder, comprising a resistance wire being connected with its both ends (2, 3) to a voltage source (12) and being bent to a loop having parallel legs (5, 6) at the working side, characterized in that the both parallel legs (5, 6) of the loop (1) are arranged at least over part of their length with a small distance (a) one from the other and are bent within this part, an enlargement (9) of this small distance (a) being provided within said bend (8) for receiving the soldered joint.

2. Working head according to claim 1, characterized in that the both parallel legs (5, 6) have over at least part of their length a distance between 0.1 and 0.3 mm.

3. Working head according to claim 1, characterized in that the enlargement (9) is approximately limited by circular arcs.

4. Working head according to claim 1, characterized in that the both legs (5, 6) have a distance of approximately 1 mm within the area of the enlargement.

5. Working head according to claim 1, characterized in that the legs (5, 6) of the loop (1) are bent for approximately 180° within the area of the bend (8).

## Revendications

1. Tête de travail pour un dispositif électrique destiné à désouder des joints brasés et à éliminer le métal liquide d'apport, comportant un fil de résistance raccordé à ses deux extrémités (2, 3) à une source de tension (12), recourbé en une boucle avec des branches (5, 6) parallèles sur la face de travail, caractérisée en ce que les deux branches parallèles (5, 6) de la boucle (1) sont placées sur au moins une partie de leur longueur à une distance réduite (a) l'une de l'autre et sont recourbées sur cette partie, un élargissement (9) de cette distance réduite (a) étant prévu dans cette courbure (8) afin d'accueillir le joint brasé.

2. Tête de travail selon la revendication 1, caractérisée en ce que les deux branches parallèles (5, 6) présentent sur au moins une partie de leur longueur un écartement compris entre 0,1 et 0,3 mm.

3. Tête de travail selon la revendication 1, caractérisée en ce que l'élargissement (9) est limité par des arcs de cercle.

4. Tête de travail selon la revendication 1, caractérisée en ce que les deux branches (5, 6) présentent au niveau de l'élargissement un écartement de 1 mm environ.

5. Tête de travail selon la revendication 1, caractérisée en ce qu'au niveau de la courbure (8), les branches (5, 6) de la boucle (1) sont recourbées à 180° environ.

FIG.1

FIG.2

FIG.3